# FASCICULE DE BREVET EUROPEEN

(11) **EP 1 781 515 B1**
(45) Date de publication et mention de la délivrance du brevet: **12.01.2011**
(21) Numéro de dépôt: 05796263.1
(22) Date de dépôt: 03.08.2005
(51) Int. Cl.: B60S 1/52

(54) **TRAPPE D'OBTURATION D'UNE OUVERTURE DANS UNE PEAU DE PARE-CHOCS D'UN VEHICULE AUTOMOBILE**
KLAPPE ZUM SCHLIESSEN EINER ÖFFNUNG AN DER STOSSSTANGENVERKLEIDUNG EINES KRAFTFAHRZEUGS
FLAP FOR CLOSING AN OPENING IN A MOTOR VEHICLE BUMPER SKIN

(30) Priorité: 24.08.2004 FR 0409071
(43) Date de publication de la demande: 09.05.2007
(73) Titulaire: PEUGEOT CITROËN AUTOMOBILES S.A., 78140 Vélizy Villacoublay (FR)
(72) Inventeur: DUMUR, Denis, F-78990 ELANCOURT (FR)
(86) Numéro de dépôt international: PCT/FR2005/002023
(87) Numéro de publication internationale: WO 2006/024782

(56) Documents cités:
- EP-A- 1 125 808
- EP-A- 1 466 796
- EP-A- 1 512 595
- DE-A1- 10 015 077

## Description

La présente invention concerne une trappe d'obturation d'une ouverture dans une peau de pare-chocs d'un véhicule automobile.

Certains véhicules automobiles sont équipés, au niveau de chaque projecteur avant, d'un lave-phare qui le plus souvent comprend un gicleur monté à l'extrémité d'un bras déplaçable par translation entre une première position dans laquelle le gicleur est escamoté derrière une peau de pare-chocs et une seconde position dans laquelle ce gicleur est en saillie devant la peau de pare-chocs et projette un liquide sur le projecteur correspondant.

Pour cela, la peau de pare-chocs est pourvue, au dessous de chaque projecteur avant, d'une ouverture permettant le passage du bras portant le gicleur. L'ouverture est fermée, dans la position escamotée du bras, par une trappe d'obturation portée par l'extrémité de ce bras, comme cela est divulgué par le document EP 1 125 808A

Mais, dans une même gamme de véhicule, certaines versions de ce véhicule peuvent ne pas être équipées de lave-phares.

Or, dans un but de standardisation des éléments de la gamme du véhicule, la peau de pare-chocs est identique pour tous les véhicules et comporte donc, au dessous de chaque projecteur avant, une ouverture.

Jusqu'à présent, les constructeurs de véhicules automobiles disposent d'une première version d'une trappe qui permet d'obturer chaque ouverture de la peau de pare-chocs pour les véhicules ne comportant pas de lave-phares et d'une seconde version d'une trappe qui est montée sur l'extrémité du bras du lave-phare et qui permet d'obturer l'ouverture correspondante dans la position escamotée de ce lave-phare. Chaque trappe est donc pourvue de moyens d'accrochage spécifiques à son utilisation.

Cette double version d'une trappe pour une même fonction complique la gestion et augmente bien évidemment les coûts pour les constructeurs de véhicules automobiles. En effet, dans le cas d'une trappe en matière plastique, il faut prévoir un moule pour chaque version.

De même, le document EP 1 512 595 A publié après la date de priorité de la présente demande, divulgue une trappe d'obturation permettant d'obturer chaque ouverture de la peau de pare-chocs de véhicules ne comportant pas de lave-phares. Pour les véhicules issus de la même gamme et équipés d'un lave-phare, une plaque complémentaire comportant des moyens d'accrochage au lave-phares est montée dans cette trappe d'obturation. Le problème de la gestion des stocks n'est pas résolu par la présente demande.

L'invention a pour but d'éviter ces inconvénients

L'invention a donc pour objet une trappe d'obturation d'une ouverture dans une peau de pare-chocs d'un véhicule automobile, **caractérisée en ce qu'**elle comporte, sur l'une de ses faces, des premiers organes de fixation sur l'extrémité d'un bras d'un lave-phare escamotable et des seconds organes de fixation sur la peau de pare-chocs pour un véhiculé sans lave-phares, lesdits seconds organes de fixation étant séparables de la trappe.

Selon d'autres caractéristiques de l'invention :
- les premiers organes de fixation comprennent des pattes d'accrochage sur l'extrémité du bras du lave-phare,
- les seconds organes de fixation comprennent au moins deux pattes d'accrochage parallèles, s'étendant sensiblement perpendiculairement à ladite trappe et destinées à coopérer chacune avec un orifice ménagé sur un bord de l'ouverture,
- chaque patte d'accrochage comporte, à sa base, une zone d'amorce de rupture,
- chaque patte d'accrochage comporte deux griffes, une première griffe de maintien sur l'ouverture de cette trappe à une distance déterminée de la peau de pare-chocs et une seconde griffe de verrouillage de ladite trappe sur la peau de pare-chocs pour obturer l'ouverture,
- la trappe comprend, sur la face munie des organes de fixation, deux pions d'indexation en position destinés à coopérer chacun avec un orifice ménagé sur un bord de l'ouverture.

D'autres caractéristiques et avantages de l'invention apparaîtront à la lecture de la description qui va suivre, donnée à titre d'exemple et faite en référence aux dessins annexés, sur lesquels :
- la figure 1 est une vue schématique en perspective d'une trappe d'obturation d'une ouverture dans une peau de pare-chocs,
- la figure 2 est une vue schématique en perspective de l'ouverture de la peau de pare-chocs destinée à recevoir la trappe représentée à la figure 1,
- la figure 3 est une vue schématique en perspective de la trappe de la figure 1 dans le cas d'un véhicule équipé de lave-phares,
- la figure 4 est une vue schématique en élévation et partiellement en coupe d'un bras de lave-phare équipé d'une trappe conforme à l'invention, dans la position escamotée de ce bras, et
- la figure 5 est une vue schématique en élévation et partiellement en coupe du bras de lave-phare dans la position en saillie de ce bras.

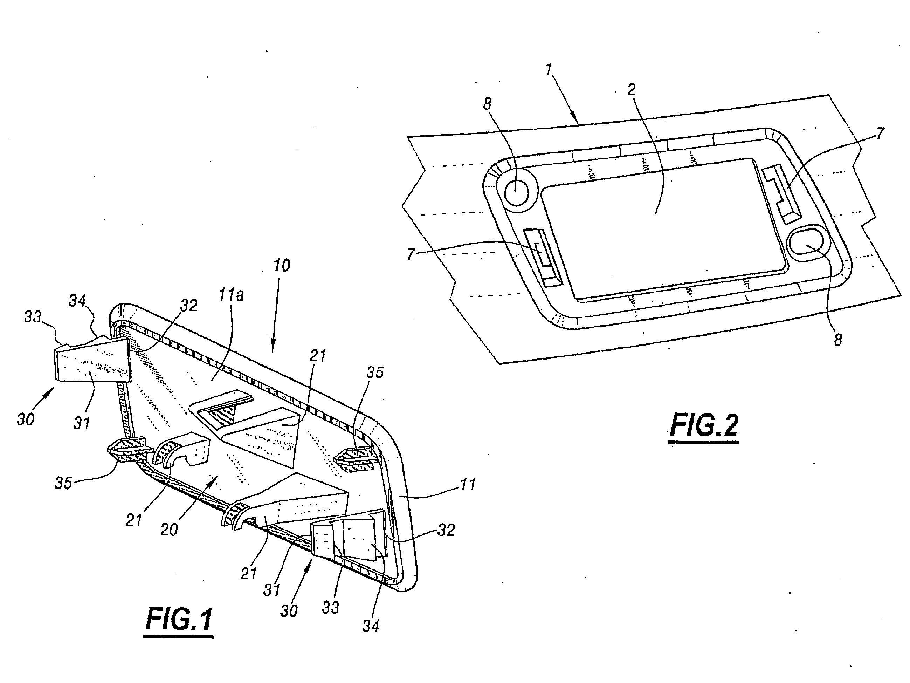

Sur la figure 1, on a représenté schématiquement une trappe désignée dans son ensemble par la référence générale 10 pour l'obturation d'une ouverture 2 ménagée dans une peau de pare-chocs 1 (Fig. 2).

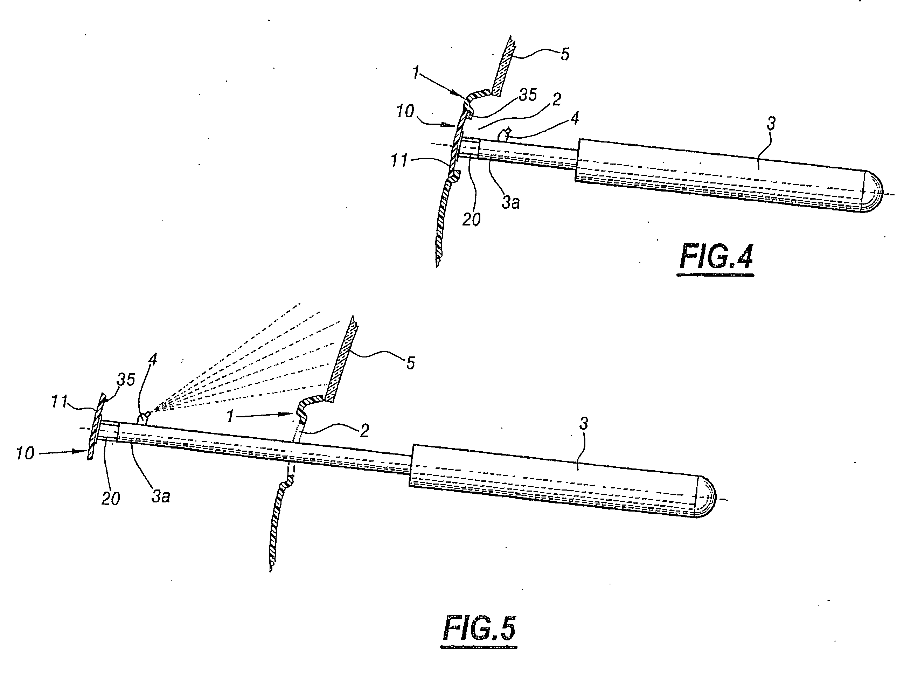

Cette ouverture 2 ménagée dans la peau de pare-chocs 1 est destinée au passage, dans le cas d'un véhicule équipé d'un lave-phare, d'un bras 3 (figures 4 et 5), qui porte, à son extrémité 3a, un gicleur 4 et qui est déplaçable par translation entre une première position dans laquelle le gicleur 4 est escamoté derrière la peau de pare-chocs 1, comme montré à la figure 4, et une seconde position dans laquelle ce gicleur 4 est en saillie devant la peau de pare-chocs 1 de façon à projeter un liquide de nettoyage sur le projecteur 5 correspondant disposé au-dessus de l'ouverture 2, comme montré à la Fig. 5.

La trappe 10 selon l'invention est destinée à obturer l'ouverture 2 aussi bien dans le cas d'une version du véhicule automobile ne comportant pas de lave-phares 3 que dans une version comportant un lave-phare 3.

Pour cela, la trappe d'obturation 10 est formée par une plaque 11 par exemple en matière plastique et qui présente une forme générale rectangulaire correspondant sensiblement à la forme de l'ouverture 2 pour obturer cette ouverture dans les deux cas d'utilisation de cette trappe 10, c'est à dire dans le cas d'un véhicule ne comportant pas de lave-phares 3 et dans le cas d'un véhicule automobile comportant un lave-phare 3 pour la projection d'un liquide sur chaque projecteur 5 par l'intermédiaire du gicleur 4, dans la position déployée du bras 3, ainsi que montré à la figure 5.

A cet effet et comme montré à la figure 1, la plaque 11 de la trappe 10 comporte sur l'une 11a de ses faces, des premiers organes 20 de fixation sur l'extrémité du bras 3 du lave-phare et des seconds organes 30 de fixation directement sur la peau de pare-chocs 1 dans le cas d'un véhicule automobile ne comportant pas de lave-phares 3, comme on le verra ultérieurement.

Les premiers organes de fixation 20 sont formés par des pattes d'accrochage 21, de type classique, sur l'extrémité 3a du bras 3 de telle manière que la trappe d'obturation 10 se déplace avec le bras 3 entre une première position représentée à la figure 4 et dans laquelle cette trappe 10 est appliquée sur le pourtour de l'ouverture 2 ménagée dans la peau de pare-chocs 1 de façon à obturer cette ouverture 2 et une seconde position représentée à la figure 5 dans laquelle la trappe 10 est écartée de l'ouverture 2 permettant au gicleur 4 de projeter du liquide sur le projecteur 5.

Les organes de fixation 30 permettant le maintien de la plaque 11 de la trappe 10 pour l'obturation de l'ouverture 2 dans le cas d'une version du véhicule automobile ne comportant pas de lave-phares 3 sont formés par deux pattes d'accrochage 31 parallèles et s'étendant sensiblement perpendiculairement à ladite plaque 11 de la trappe 10.

Chaque patte d'accrochage 31 des organes de fixation 30 est destinée à coopérer avec un orifice 7 ménagé sur deux bords opposés de l'ouverture 2 et qui, dans l'exemple de réalisation représenté sur la figure 2, présente une forme rectangulaire complémentaire à la section transversale de chaque patte d'accrochage 31.

Chacune de ces pattes d'accrochage 31 formant les organes de fixation 30 comporte, à sa base, une zone 32 d'amorce de rupture permettant de séparer ces pattes d'accrochage 31 de la plaque 11 de la trappe 10 dans le cas d'une utilisation de cette trappe 10 pour l'obturation de l'ouverture 2 pour un véhicule automobile ne comportant pas de bras 3 de lave-phares.

Ainsi que montré à la figure 1, chaque patte d'accrochage 31 comporte deux griffes, une première griffe 33 de maintien sur l'ouverture 2 de cette trappe 10 à une distance déterminée de la surface de la peau de pare-chocs 1 pour permettre la peinture simultanément de la peau de pare-chocs et de la plaque 11 de la trappe 10 et d'une seconde griffe 34 de verrouillage de ladite trappe 10 sur la peau de pare-chocs 1 de façon à obturer l'ouverture 2.

La face 11a de la plaque 11 de la trappe 10 comporte, en plus des organes de fixation 20 et 30, deux pions 35 disposés chacun à un coin de la plaque 11 de la trappe 10 et destinés à coopérer avec un orifice 8 ménagé dans la peau de pare-chocs 1 sur le bord de l'ouverture 2 pour assurer le positionnement de la trappe 10 selon les trois axes X, Y, Z d'un repère d'axes orthonormés.

Au moment de la peinture du véhicule et notamment de la peau de pare-chocs 1, l'opérateur positionne chaque trappe 10 au niveau d'une ouverture 2 correspondante en introduisant les pattes d'accrochage 31 dans les orifices 7 uniquement au niveau de la première griffe 33 pour que la trappe 10 ménage avec la peau de pare-chocs un espace permettant à la peinture de pénétrer entre la peau de pare-chocs 1 et la trappe 10. Le prépositionnement des trappes 10 sur la peau de pare-chocs 1 au moment de la peinture permet de garantir d'obtenir le même ton de peinture sur ces éléments que sur la peau de pare-chocs.

Dans le cas d'un véhicule ne comportant pas de bras 3 de lave-phares, l'opérateur applique chaque trappe 10 sur la peau de pare-chocs 1 de telle manière que la seconde griffe 34 de chaque patte d'accrochage 33 pénètre dans un orifice 7 et assure le maintien de la trappe 10 pour l'obturation de l'ouverture 2.

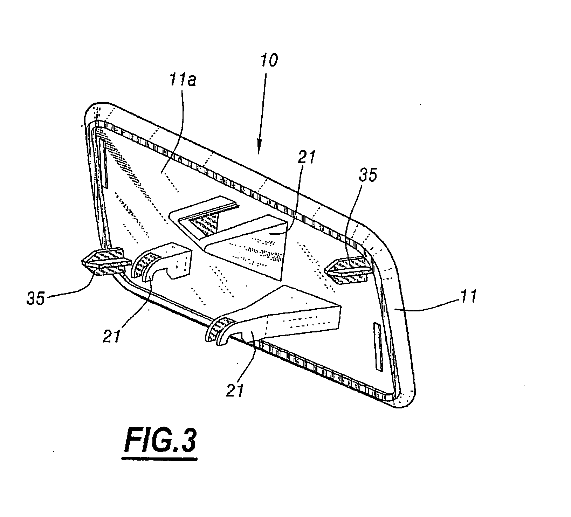

Dans le cas d'un véhicule équipé de bras 3 de lave-phares, l'opérateur casse chaque patte d'accrochage 31 comme montré à la figure 3, cette manoeuvre étant facilitée par la zone 32 d'amorce de rupture ménagée à la base de chacune de ces pattes 31. Ensuite, l'opérateur monte sur l'extrémité libre 3a de chaque bras 3 de lave-phares, une trappe 10 au moyen des pattes d'accrochage 21. En position escamotée du bras 3 de lave-phares, comme montré à la figure 4, la trappe 10 assure l'obturation de l'ouverture 2. Les pions d'indexage 35 assurent le centrage de la trappe 10 par rapport à l'ouverture 2. Dans la position d'utilisation du lave-phare, la trappe 10 se déplace en même temps que le bras 3, comme montré à la figure 5.

La trappe d'obturation selon l'invention présente l'avantage de pouvoir être utilisée pour des véhicules comportant des laves-phares et pour des véhicules ne comportant pas un tel accessoire.

De préférence, cette trappe est réalisée en matière plastique. Ainsi, grâce à la double utilisation de la trappe selon 'l'invention, un seul moule est nécessaire pour fabriquer cette trappe, ce qui pour les constructeurs présente un avantage important du fait de la diminution des coûts de fabrication.

## Revendications

1. Trappe d'obturation d'une ouverture (2) dans une peau de pare-chocs (1) d'un véhicule automobile, **caractérisée en qu'**elle comporte, sur l'une de ses faces, des premiers organes de fixation (20) sur l'extrémité d'un bras (3) d'un lave-phare escamotable et des seconds organes de fixation (30) sur la peau de pare-chocs (1) pour un véhicule sans lave-phares, lesdits seconds organes de fixation (30) étant séparables de la trappe (10) et en ce que les premiers 20) et les seconds (30) organes de fixation sont venus de matière avec la trappe d'obturation.

2. Trappe d'obturation selon la revendication 1, **caractérisée en ce que** les premiers organes de fixation (20) comprennent des pattes d'accrochage (21) sur l'extrémité du bras (3) du lave-phare.

3. Trappe d'obturation selon la revendication 1, **caractérisée en ce que** les seconds organes de fixation (30) comprennent au moins deux pattes d'accrochage (31) parallèles, s'étendant sensiblement perpendiculairement à ladite trappe 10 et destinées à coopérer chacune avec un orifice (7) ménagé sur un bord de l'ouverture (2).

4. Trappe d'obturation selon la revendication 3, **caractérisée en ce que** chaque patte d'accrochage (31) comporte, à sa base, une zone (32) d'amorce de rupture.

5. Trappe d'obturation selon la revendication 3 ou 4, **caractérisée en ce que** chaque patte d'accrochage (31) comporte deux griffes (33 ; 34), une première griffe (33) de maintien sur l'ouverture (2) de cette trappe (10) à une distance déterminée de la peau de pare-chocs (1) et une seconde griffe (34) de verrouillage de ladite trappe (10) sur la peau de pare-chocs (1) pour obturer l'ouverture (2).

6. Trappe d'obturation selon l'une quelconque des revendications 1 à 5, **caractérisée en ce qu'**elle comprend, sur la face munie des organes de fixation (20 ; 30), deux pions (35) d'indexation en position destinés à coopérer chacun avec un orifice (8) ménagé sur un bord de l'ouverture (2).

## Claims

1. Flap for closing an opening (2) in a motor vehicle bumper skin (1), **characterised in that** it comprises, on one of its faces, first members (20) for fixing it to the end of one arm (3) of a retractable headlight washer and second members (30) for fixing it to the bumper skin (1) for a vehicle without headlight washers, said second fixing members (30) being separable from the flap (10) and **in that** the first (20) and the second (30) fixing members are formed integrally with the closing flap.

2. Closing flap according to claim 1, **characterised in that** the first fixing members (20) comprise lugs (21) for attachment to the end of the arm (3) of the headlight washer.

3. Closing flap according to claim 1, **characterised in that** the second fixing members (30) comprise at least two parallel attachment lugs (31) which extend substantially at right angles to said flap (10) and are each intended to cooperate with an orifice (7) provided on an edge of the opening (2).

4. Closing flap according to claim 3, **characterised in that** each attachment lug (31) comprises, on the base thereof, an incipient crack region (32).

5. Closing flap according to claim 3 or 4, **characterised in that** each attachment lug (31) comprises two claws (33; 34), a first claw (33) for holding this flap (10) on the opening (2) at a set distance from the bumper skin (1) and a second claw (34) for locking said flap (10) on the bumper skin (1) to close the opening (2).

6. Closing flap according to any one of claims 1 to 5, **characterised in that** it comprises, on the face equipped with fixing members (20; 30), two locating pins (35) each intended to cooperate with an orifice (8) provided on an edge of the opening (2).

## Patentansprüche

1. Klappe zum Abdecken einer Öffnung (2) in einer Stoßfängerhaut (1) eines Kraftfahrzeugs, **dadurch gekennzeichnet, dass** sie an einer ihrer Seiten erste Organe für die Befestigung (20) an dem Ende eines Arms (3) eines versenkbaren Scheinwerfer-Wischers und zweite Organe zur Befestigung (30) an der Stoßfängerhaut (1) für ein Fahrzeug ohne Scheinwerfer-Wischer aufweist, wobei die zweiten Befestigungsorgane (30) von der Klappe (10) lösbar sind, und dass die ersten (20) und die zweiten (30) Befestigungsorgane einstückig mit der Abdeckklappe ausgebildet sind.

2. Abdeckklappe nach Anspruch 1, **dadurch gekennzeichnet, dass** die ersten Befestigungsorgane (20) Klauen zum Einhaken (21) an dem Ende des Arms (3) des Scheinwerfer-Wischers aufweisen.

3. Abdeckklappe nach Anspruch 1, **dadurch gekennzeichnet, dass** die zweiten Befestigungsorgane (30) zumindest zwei parallele Einhakklauen (31) aufweisen, die sich im Wesentlichen senkrecht zu der Klappe (10) erstrecken und jeweils für das Zusammenwirken mit einem Schlitz (7) vorgesehen sind, der an einem Rand der Öffnung (2) ausgebildet ist.

4. Abdeckklappe nach Anspruch 3, **dadurch gekennzeichnet, dass** jede Einhakklaue (31) an ihrem Fuß eine Sollbruchstelle (32) aufweist.

5. Abdeckklappe nach Anspruch 3 oder 4, **dadurch gekennzeichnet, dass** jede Einhakklaue (31) zwei Greifer (33; 34) aufweist, einen ersten Greifer (33), um diese Klappe (10) an der Öffnung (2) in einem bestimmten Abstand von der Stoßfängerhaut (1) zu halten, und einen zweiten Greifer (34), um die Klappe (10) an der Stoßfängerhaut (1) zu verriegeln, um die Öffnung (2) zu verschließen.

6. Abdeckklappe nach einem der Ansprüche 1 bis 5, **dadurch gekennzeichnet, dass** sie an der Seite, die mit den Befestigungsorganen (20; 30) versehen ist, zwei Indexierstifte in Positionaufweist, die jeweils für das Zusammenwirken mit einem Schlitz (8) vorgesehen sind, der an einem Rand der Öffnung (2) ausgebildet ist.
